(19) Europäisches Patentamt
European Patent Office
Office européen des brevets

(11) Publication number: **0 077 840**
**B1**

(12) **EUROPEAN PATENT SPECIFICATION**

(45) Date of publication of patent specification: **02.07.86**

(51) Int. Cl.$^4$: **C 08 G 59/40**, C 08 G 73/12, C 08 L 63/00

(21) Application number: **81108763.4**

(22) Date of filing: **23.10.81**

(54) **Curable resin composition.**

(43) Date of publication of application:
**04.05.83 Bulletin 83/18**

(45) Publication of the grant of the patent:
**02.07.86 Bulletin 86/27**

(84) Designated Contracting States:
**DE FR GB**

(56) References cited:
**EP-A-0 010 489**
**GB-A-2 046 263**

(73) Proprietor: **MITSUI TOATSU CHEMICALS, INCORPORATED**
**2-5 Kasumigaseki 3-chome**
**Chiyoda-Ku Tokyo 100 (JP)**

(72) Inventor: **Tsuboi, Hikotada**
**1541, Yabe-cho Totsuka-ku**
**Yokohama Kanagawa-ken (JP)**
Inventor: **Kawamata, Motoo**
**2261-24, Kamigou-cho Totsuka-ku**
**Yokohama Kanagawa-ken (JP)**
Inventor: **Oba, Masayuki**
**2882, Iijima-cho Totsuka-ku**
**Yokohama Kanagawa-ken (JP)**
Inventor: **Koga, Nobuhito**
**1773-62, Kamigou-cho Totsuka-ku**
**Yokohama Kanagawa-ken (JP)**

(74) Representative: **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 077 840 B1**

**Description**

*Background of the Invention*

1) Field of the Invention:

This invention relates to a resin composition capable of yielding a cured material excellent in heat resistance, and more particularly, it relates to a curable resin composition capable of providing varnish of improved workability and stability as well as formed products of excellent curability and physical and chemical properties.

2) Description of the Prior Art:

Maleimide-type resins are known as resins having excellent resistance to heat and are used, for example, in the form of polymaleimide resin which is a homopolymer of a maleimide compound or polymaleimide-polyamine type resin which is a copolymer with an amine. These maleimide-type resins can generally provide satisfactory properties with respect to resistance to heat. However, prior to polymerization, such maleimide compounds have a high melting point and, moreover, can be hardly dissolved in an organic solvent commonly used for the production of varnish and laminates. Due to the above-described nature of maleimide compounds, they are accompanied by a drawback that they must be dissolved in a polar solvent having a high boiling point and high hygroscopicity prior to their application. Thus, an impregnating varnish may be prepared from such a maleimide compound by using a polar solvent represented by N-methyl-2-pyrrolidone, N,N-dimethylacetamide, or N,N-dimethylformamide. Use of such a solvent however is not preferable as it is not only expensive but also susceptible of penetrating through the skin and absorbed in the human body, in other words, it is very toxic.

Furthermore, when a laminate is produced with varnish containing such a solvent, the solvent will become a main cause for deteriorating the properties of the laminate as it tends to remain in the final product to be obtained upon heating and curing same.

Where a usual maleimide-type resin is employed for the production of a copper-lined laminate, the adhesion between a copper foil and the substrate is not always good and its workability such as blanking work is not satisfactory.

On the other hand, epoxy resins are extensively used as various electric insulators, molded products, adhesive and paint since they can generally afford, upon curing same with a wide variety of curing agents, cured products excellent in electrical characteristics, mechanical characteristics, dimensional stability and chemical resistance.

However, despite having such excellent properties, conventional epoxy resins are considered to be unsatisfactory with respect to resistance to heat. Thus, varied methods have been taken into consideration with a view toward enhancing their resisatance to heat.

To obtain a resin excellent in varied properties and assuring big commercial utility by maintaining the advantageous features of these two resins and simultaneously compensating for their drawbacks, it has been attempted to incorporate a maleimide compound in epoxy resin. However, it was very difficult to obtain a uniform and stable composition which is suitable for actual use, as conventional general maleimide compounds are considerably poor in their miscibility with epoxy resins and, for example, when formulated into varnish using a solvent, such varnish are susceptible to separation and, when employed for solventless casting, the maleimide compounds tend to deposit as crystals.

*Summary of the Invention*

An object of this invention is to provide a stable and uniform composition of at least one N-(alkenylphenyl)maleimide compound and one or more kinds of epoxy resins.

Another object of this invention is to provide a curable resin composition which can be formulated into a form suitable for application by using a commonly-used solvent of a relatively low boiling point.

A further object of this invention is to provide a curable resin composition featuring improved work efficiency and facilitating the removal of solvent from cured products.

A still further object of this invention is to provide a curable resin composition capable of yielding a molded product having excellent resistance to heat and excellent mechanical strength at elevated temperatures.

N-(Alkenylphenyl)maleimides, their dimers and their polymers having a polymerization degree of at least 3 contain, besides unsaturated bonds of maleimido group, other unsaturated bonds originated from alkenyl groups or their polymers, which unsaturated bonds form strong bonds with the epoxy compound or compounds or curing agent, whereby increasing the cross-linking density of the resulting cured product and, corollary to this, providing a molded product having excellent heat resistance and outstanding mechanical strength at high temperatures. In a product obtained by curing a resin composition according to this invention, the heat resistance which is inherent to general maleimide compound is further enhanced. In addition, the product maintains sufficiently the excellent properties of an epoxy resin. Accordingly, it is equipped with properties promising its application in the electronic field where a high degree of accuracy and reliability is required.

*Detailed Description of the Invention*

The curable resin composition according to this invention comprises:

a) at least one maleimide compound selected from the group consisting of N-(alkenylphenyl)maleimides represented by the general formula (I):

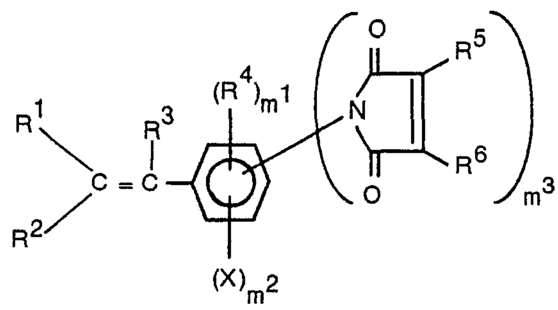

(I)

wherein $R^1$—$R^6$ may be the same or different from one another and denote independently hydrogen, a hydrocarbon group having 1—20 carbon atoms, a halogen,

$$R^7O\text{— or } R^7\overset{O}{\overset{\|}{C}}\text{— group}$$

(where $R^7$ represents a hydrocarbon group having 1—20 carbon atoms or a hydrocarbon group having 1—20 carbon atoms and substituted by one or more halogen atoms of at least one kind), hydroxyl group, cyano group, or a hydrocarbon group substituted by one or more halogens

$$R^7O\text{— or } R^7\overset{O}{\overset{\|}{C}}\text{— group}$$

(where $R^7$ is as defined above), hydroxyl group or cyano group and having 1—20 carbon atoms prior to the substitution, a plurality of $R^4$s may be the same or different when $m^1$ stands for a value of 2 or greater, $R^3$ may be coupled with either $R^1$ or $R^2$, thereby forming a ring, X denotes at least one atom or group selected from hydrogen, halogens, hydroxyl group,

$$R^7O\text{— or } R^7\overset{O}{\overset{\|}{C}}\text{— and } R^7\overset{O}{\overset{\|}{C}}\overset{H}{\overset{|}{N}}\text{— groups}$$

(where $R^7$ is as defined above), cyano group, nitro group and carboxyl group, a plurality of Xs may be the same or different when $m^2$ stands for a value of 2 or greater, and $m^1$, $m^2$ and $m^3$ represent independently a positive integer and $m^1 + m^2 + m^3 = 5$, dimers of said maleimides and polymers of said maleimides having a polymerization degree of at least 3; and

b) one or more kinds of epoxy resins, each having at least one epoxy group in the unit molecule thereof.

Furthermore, the curable resin composition according to this invention may also contain, in addition to a) at least one maleimide compound represented by the above general formula (I) and b) one or more kinds of epoxy resins, each, having at least one epoxy group in the unit molecule thereof, c) an amino compound represented by the general formula (II):

$$Q\text{—}(NH_2)_n \qquad \text{(II)}$$

wherein Q indicates an organic group having 1—150 carbon atoms and a valence of $n$, Q may contain at least one kind of arom selected from hydrogen, oxygen, sulphur, halogen, nitrogen, phosphorus and silicon atoms, and $n$ stands for an integer of at least 1. This curable resin composition may contain at least one kind of a prepolymer of at least parts of any two components among components a), b) and c).

The N-(alkenylphenyl)maleimide compounds, its dimers and its polymers having a polymerization degree of at least 3 as well as their amine derivatives have excellent solubility to solvent compared with general maleimide compounds and their amine derivatives as well as extremely good miscibility with epoxy resin. Owing to such solubility and miscibility, as already mentioned above, the present inventors have succeeded in obtaining a stable and uniform composition of a maleimide compound and epoxy resin, which composition has scarcely been obtained heretofore, through the use of a novel maleimide

compound of the formula (I) as its maleimide component. Without depending on a polar organic solvent such as N-methyl-2-pyrrolidone, N,N-dimethylformamide or N,N-dimethylacetamide which has been used for compositions containing conventional maleimide compounds, the resin composition according to this invention may be satisfactorily applied by using a general organic solvent of a relatively low boiling point. Thus, the resin composition according to this invention not only leads to an improved work efficiency but also renders the removal of solvent from resulting products easy, and also provides a cured product of considerably improved quality.

As examples of N-(alkenylphenyl)maleimides represented by the above general formula (I) and usable in the present invention, there are:

N-(o-vinylphenyl)maleimide;
N-(m-vinylphenyl)maleimide;
N-(p-vinylphenyl)maleimide;
N-(o-isopropenylphenyl)maleimide;
N-(m-isopropenylphenyl)maleimide;
N-(p-isopropenylphenyl)maleimide;
N-(vinyltolyl)maleimide, including all isomers thereof;
N-(isopropenyltolyl)maleimide, including all isomers thereof;
N-(p-α-ethylvinylphenyl)maleimide;
N-(m-α-ethylvinylphenyl)maleimide;
N-(p-α,β-dimethylbiphenyl)maleimide;
N-(m-α,β-dimethylvinylphenyl)maleimide;
N-(p-α-methyl-β-isopropylvinylphenyl)maleimide;
N-(m-α-methyl-β-isopropylvinylphenyl)maleimide;
N-(p-α-isobutylvinylphenyl)maleimide;
N-(m-α-isobutylvinylphenyl)maleimide;
N-(p-1-cyclohexenylphenyl)maleimide;
N-(m-1-cyclohexenylphenyl)maleimide;
N-(o-vinylphenyl)-3,4-dichloromaleimide;
N-(m-vinylphenyl)-3,4-dichloromaleimide;
N-(p-vinylphenyl)-3,4-dichloromaleimide;
N-(p-isopropenylphenyl)-3,4-dichloromaleimide;
N-(m-isopropenylphenyl)-3,4-dichloromaleimide;
N-(o-isopropenylphenyl)-3,4-dichloromaleimide;
N-(p-isopropenylphenyl)-3,4-dibromomaleimide;
N-(p-isopropenylphenyl)-3,4-difluoromaleimide;
N-(4-vinyl-2-methoxyphenyl)maleimide;
N-(4-vinyl-3-methoxyphenyl)maleimide;
N-(4-isopropenyl-2-methoxyphenyl)maleimide;
N-(3-isopropenyl-4-methoxyphenyl)maleimide;
N-(4-vinyl-2-acetylphenyl)maleimide;
N-(4-isopropenyl-2-acetylphenyl)maleimide;
N-(4-vinyl-2-hydroxyphenyl)maleimide;
N-(4-isopropenyl-2-hydroxyphenyl)maleimide;
N-(4-isopropenyl-3-cyanophenyl)maleimide;
N-(4-isopropenyl-2-cyanophenyl)maleimide;
N-(4-vinyl-2-cyanophenyl)maleimide;
N-(p-α-chloromethyl-β-chlorovinylphenyl)maleimide;
N-(p-α-dichloromethyl-β-dichlorovinylphenyl)maleimide;
N-(p-α-bromomethyl-β-bromovinylphenyl)maleimide;
N-(p-vinylphenyl)-3-cyanomaleimide;
N-(p-vinylphenyl)-3,4-dicyanomaleimide;
N-(p-isopropenyl)-3,4-dicyanomaleimide;
N,N'-(1-vinyl-2,4-phenylene)bismaleimide;
N,N'-(1-vinyl-3,5-phenylene)bismaleimide;
N,N'-(1-isopropenyl-2,4-phenylene)bismaleimide;
N,N'-(1-isopropenyl-3,5-phenylene)bismaleimide;
N-(p-vinylphenyl)-3,4-di-t-butylmaleimide;
N-(p-isopropenylphenyl)-3,4-diisopropylmaleimide;
N-[4-α-(p-cyanophenyl)vinylphenyl]maleimide;
N-[4-α-methyl-β-(m-chlorophenyl)vinylphenyl]maleimide;
N-[4-α-(p-methoxyphenyl)vinylphenyl]maleimide;
N-[4-α-methyl-β-(m-acetylphenyl)vinylphenyl]maleimide;
N-[4-α-methyl-β-(p-hydroxyphenyl)vinylphenyl]maleimide;
N-(p-isopropenylphenyl)-3-(p-acetylphenyl)maleimide;
N-(p-vinylphenyl)-3-(p-methoxyphenyl)maleimide;

N-(m-isopropenylphenyl)-3-(p-chlorophenyl)maleimide;
2-isopropenyl-4-N-maleimido-4'-chlorobiphenyl;
4-isopropenyl-2-N-maleimido-4'-methylbiphenyl;
3-isopropenyl-4-N-maleimido-3'-methoxybiphenyl;
3-vinyl-4-N-maleimido-4'-hydroxybiphenyl;
3-isopropenyl-4-N-maleimido-4'-acetylbiphenyl;
2-N-maleimido-4-isopropenyl-4'cyanobiphenyl;
N-(4-vinyl-3-nitrophenyl)maleimide;
N-(4-isopropenyl-3-carboxyphenyl)maleimide; and
N-(4-isopropenyl-3-acetylaminophenyl)maleimide.

In the present invention, dimers and/or trimers of the above N-(alkenylphenyl)maleimides may be used. As examples of such dimers of N-(alkenylphenyl)maleimides, there may be mentioned linear dimers of N-(p-isopropenylphenyl)maleimides, represented by the following formulae (III) and (IV):

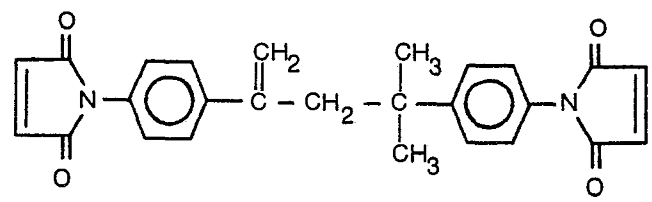

(III)

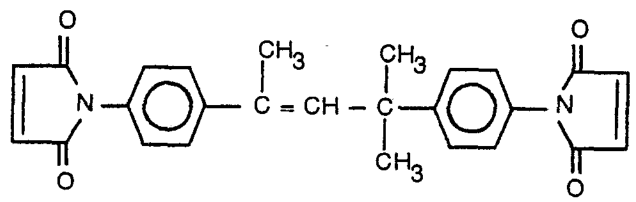

(IV)

On the other hand, the polymers of N-(alkenylphenyl)maleimides are not limited to any specific polymers, but such polymers desirously have a molecular weight not higher than 10,000.

These dimers and polymers of N-(alkenylphenyl)maleimides are generally prepared by dimerizing or polymerizing N-(alkenylphenyl)maleimides in the presence of a suitable catalyst. Particularly in the case of a linear dimer and polymer of N-(p-isopropenylphenyl)maleimide, the following production method may be followed. Namely, in a first step of the reaction process, a maleamic acid is prepared by causing maleic anhydride to react with the dimer or polymer of p-isopropenylaniline which has been obtained beforehand by heating p-isopropenylaniline in an inert organic solvent, if necessary, in the presence of an acidic catalyst. Then, in a second step of the reaction process (i.e., dehydrocyclization reaction), the dimer or polymer is imidated in the presence of a catalyst into bismaleimide or polymaleide. This two-step process is known per se in the art.

As specific examples of an epoxy resin usable in the present invention and having at least one epoxy group in its unit molecule, there may be mentioned bisphenol-A epoxy resin, bisphenol-F epoxy resin, phenol novolak epoxy resin, cresol novolak epoxy resin, alicyclic epoxy resins, heterocyclic epoxy resins such as triglycidylcyanurate, triglycidylisocyanurate and N,N-diglycidyl-5,5-dimethylhydantoin, hydrogenated bisphenol-A epoxy resins, aliphatic epoxy resins such as propyleneglycol diglycidylether and pentaerythritol polyglycidylether, epoxy resins obtained from the reactions between aliphatic or aromatic carboxylic acids and epihalohydrins such as epichlorohydrin, epoxy resins containing one or more spiro-rings, and glycidylether type epoxy resins which are reaction products of o-arylphenol novolak compounds and epichlorohydrin. In the various glycidyl compounds mentioned above, at least some of the glycidyl groups may be β-methylglycidyl groups.

In the curable resin composition according to this invention, the weight ratio of the epoxy resin to the maleimido compound is preferably in a range of 3:97—97:3, more preferably, 5:95—95:5. If the epoxy resin is used below its lower limit, excellent mechanical properties, good adhesiveness to glass cloth or copper foil, good dimensional stability and preferred electrical characteristics, all inherent to epoxy resin, can be hardly recognized. Any product resulting from such a composition is relatively brittle. Thus, the effects of this invention will be lost. On the other hand, if the epoxy resin is employed beyond its upper limit, the effects of the maleimide component used in the present invention will not be recognized, particularly, resulting in deterioration of the heat resistance of a cured product to be obtained.

In the curable resin composition according to this invention, at least parts of the maleimide compound and epoxy resin may be present in the form of a prepolymer thereof so long as the effects of this invention are not hampered.

Although a curing agent for the epoxy resin is not necessarily essential to the composition of this invention, it may be possible to employ such a curing agent together with the epoxy resin as needed. Here, the curing agent may be employed in any suitable amount. However, it shall not be used in such an amount that it impedes the excellent effects derived from the maleimido compound and epoxy resin respectively. The amount of such a curing agent should thus be limited within such a range that it improves the properties of the composition according to this invention. Among curing agents which may be employed as needed, there are trifluoroboron-amine complexes such as trifluoroboron-monoethylamine complex and trifluoroboron-piperidine complex; tertiary amines such as triethylamine, benzylmethylamine, hexamethylene tetramine and N,N-dimethylaniline; quaternary ammonium salts such as tetramethyl ammonium bromide; borate compounds such as triphenyl borate and tricresyl borate; imidazole compounds such as n-methylimidazole, N-ethylimidazole, N-phenylimidazole and N-vinylimidazole; metallic compounds such as zinc acetate, sodium acetate, cobalt naphthenate, titanium acetylacetonate, iron acetylacetonate, nickel acetylacetonate, sodium methylate, sodium ethylate and tetrabutoxy titanate; amide, urea and melamine compounds obtained from amine compounds and carboxylic acid compounds; dicyano diamides; phenol compounds such as phenol resins obtained from reaction between bisphenol-A, bisphenol-F, bisphenol-S, pyrogallol, resorcine, catechol, hydroquinone or phenol and aldehydes or ketones; isocyanate compounds such as methylene-di-p-phenylene-diisocyanate, sulphoxy-m-phenylene-diisocyanate and tolylene-diisocyanate; cyanate compounds such as methylene-di-p-phenylene-dicyanate, hydroxy-di-p-phenylene-dicyanate and sulphon-di-m-phenylene-dicyanate; anhydrides such as phthalic anhydride, hexahydrophthalic anhydride, tetrahydrophthalic anhydride, methyl-tetrahydrophthalic anhydride, methyl-hexahydrophthalic anhydride, nadic anhydride, methylnadic anhydride, chlorendic anhydride, dodecylsuccinic anhydride, methylsuccinic anhydride, benzophenone tetracarboxylic anhydride, pyromellitic anhydride and maleic anhydride. The curable resin composition according to this invention may also contain a radical polymerization initiator such as dicumyl peroxide, t-butyl perbenzoate, methylethyl ketone peroxide, or azo-bisisobutylonitrile as required.

Examples of amino compounds used in the present invention and represented by the above general formula (II) include the following compounds: aniline, toluidines, xylidines, vinylanilines, isopropenylanilines, phenylene diamines, diaminocyclohexane, 2,4-diaminotoluene, 4,4'-diaminodiphenylmethane, 3,4'-diaminodiphenylmethane, 2,2-bis(4'-aminophenyl)propane, 4,4'-diaminodiphenylether, 4,4'-diaminodiphenylsulphide, 4,4'-diaminodiphenylsulphone, 4,4'-diaminodicyclohexyl methane, m-xylylenediamine, p-xylylenediamine, bis(4-aminophenyl)diphenylsilane, bis(4-aminophenyl)methylphosphinoxide, bis(4-aminophenyl)methylphosphinoxide, tris(4-aminophenyl)thiophosphate, tris(4-aminophenyl)phosphate, 1,5-diaminonaphthalene, ethylene diamine, trimethylene diamine, tetramethylene diamine, hexamethylene diamine, nonamethylene diamine, 4-methyl-2,4-bis(p-aminophenyl)pentene-1,4-methyl-2,4-bis(p-aminophenyl)pentene-2, as well as polymers of isopropenylanilines, polymers of vinylanilines, polyamines obtained through reactions between aromatic amines (for example, aniline, toluidines, xylidines and anisidines) and aldehydes or ketones (for instance, formaldehyde, acetaldehyde, and acetone), especially, poly(phenylmethylene) polyamine obtained from the reaction between aniline and formaldehyde.

As described above, the amino compound may be aliphatic, alicyclic or aromatic. It may be substituted by various substituents. In addition, the amino compound may contain in its molecule various metallic elements, or oxygen, halogens, sulphur, phosphorus or silicon.

There is no specific limitation to the amount of the amine to be employed. However, the weight ratio of the amino compound to the N-alkenylphenyl)maleimide compound component is preferably within a range of 3:97—97:3, more preferably, within a range of 5:95—95:5. If the amino compound is used below the lower limit thereof, the effects expected from the incorporation of the amino compound, for example, the effects to further improve the excellent solubility of a composition consisting of the N-(alkenylphenyl)maleimide component and epoxy resin to solvent as well as to enhance the impact resistance of a resulting cured product would be scarcely recognized. On the other hand, if the amino compound is used beyond the upper limit thereof, the heat resistance of a resulting cured product would be substantially lowered and, when used as insulative varnish or in copper-lined laminates, there is a danger that it would accelerate the corrosion of copper. It would also be accompanied by another drawback that, when impregnated in glass cloth and formed into a laminate, the fluidity of the resin composition would become excessive. The optimum amount of the amino compound varies depending on the number of double bonds of maleimido groups and groups other than the maleimido groups in the maleimide component as well as the number of epoxy groups in the epoxy resin.

The curable resin composition according to this invention comprises the maleimide compound of the general formula (I), epoxy resin and amino compound of the general formula (II). It may be constituted by a prepolymer of any two components out of the three components and the remaining component so long as the effects of the invention are not impeded.

Namely, after reacting the maleimide compound and amino compound in advance, the reaction product may be mixed weith the epoxy resin, thereby forming the curable resin composition of this invention. There is no specific limitation to the mixing ratio of the maleimide compound and amino compound when they are reacted. However, the number ratio of all amino groups in the amino compound

to all maleimido groups in the maleimide component (expressed by equation (V) below) is preferably not greater than 1, more preferably, within a range of from 1 to 0.01.

$$\frac{m_a \cdot n_a}{M_a} \Bigg/ \frac{m_i \cdot n_i}{M_i} \leq 1 \qquad \text{(V)}$$

wherein, $m_i$, $n_i$ and $M_i$ indicate, respectively, the amount of the maleimide compound used, the average number of maleimido groups in its molecule, and its average molecular weight, whereas $m_a$, $n_a$ and $M_a$ represent, respectively, the amount of the amine component used, the average number of amino groups in its molecule and its average molecular weight.

The reaction between the maleimido compound and amino compound may generally be effected by either mixing both compounds directly without any solvent and heating same to an intimate mixture or reacting both compounds in the forms of homogeneous solutions or suspensions using a solvent. However, the reaction method shall not be limited to such specific reaction methods. The reaction is preferably carried out at a temperature of 50—200°C and for a period of 0—20 hours. Catalyst or additives may also be added as needed.

It is also possible to prepare the curable resin composition according to this invention by first mixing and reacting the epoxy resin and amino compound together and then combining the reaction product with the maleimide compound. In the reaction between the epoxy resin and amino compound, the amino compound serves as a curing agent and is thus polymerized to a higher molecular weight, thereby forming a product insoluble to solvents and infusible. Thus, the ratio of amino groups to epoxy groups is suitably controlled and the reaction product is used as a prepolymer having a molecular weight in the range of 50—8,000, together with the maleimide compound and any other compounds which may be incorporated as required. The curable resin composition according to this invention may also be a composition containing as its constituent component the product obtained by reacting a part of the epoxy resin and a part of the amino compound as described above as well as the remaining epoxy resin, amino compound and maleimide compound; or a composition containing a prepolymer obtained by preliminarily reacting the maleimide compound of the general formula (I) and the epoxy resin as well as the amino compound.

The curable resin composition according to this invention may be used with or without a solvent. When a solventless application method is adopted, it is merely mixed to a uniform mixture and then heated. Where a solvent is used, the solvent may not necessarily be limited to any specific one, but examples of preferred solvents include: 1,4-dioxane, tetrahydrofuran, methylethyl ketone, acetone, methylisobutyl ketone, cyclohexane, chloroform, methylene chloride, trichloroethane, benzene, toluene, xylene, acetonitrile, 2-methoxyethanol, 2-ethoxyethanol, 2-n-butoxyethanol, 2-ethoxyethylacetate, diethyl ether, etc. Of course, an intimately dissolved composition can be obtained by using N,N-dimethylformamide, N,N-dimethylacetamide, N-methyl-2-pyrrolidone, dimethylsulphoxide, hexamethylphosphoroamide or the like. However, such solvents are accompanied by serious drawbacks as has already been mentioned above, it is preferable to avoid the use of such solvents unless their use is indispensable due to special objective or limitation.

Where a solvent is employed, the concentration of all the resins may vary depending on the application field of the composition and use conditions. In ordinary impregnating varnish, it ranges preferably from 5—80%. For example, when used for the fabrication of laminates, an overall resin concentration lower than 5% makes it difficult to cause a required amount of the resin components to penetrate into glass cloth, thereby requiring to effect an impregnation step repeatedly or in a longer time period and considerably lowering the work efficiency. On the other hand, the presence of the resins in an amount beyond 80% of the composition is practically difficult to achieve in view of the limited solubility and miscibility of the resins. Even if such a composition is available, the viscosity of the solution would be considerably increased and it would be difficult to be defoamed prior to its curing, thereby impeding the work efficiency. A particularly preferred range of the overall concentration of resins is from 10 to 70% by weight.

The composition according to this invention may also be employed in the form of emulsion or suspension.

To the composition according to this invention, the following components may also be added, besides the maleimide compound, epoxy resin and the amino compound which may be used as required, and the reaction product of any two components of these three components:

(1) Powdery reinforcement agents, fillers and thickeners such as alumina, diatomaceous earth, magnesia, kaolin, magnesium carbonate, basic magnesium silicate, calcined clay, fine silica powder and carbon black, as well as, fibrous reinforcement agents and fillers, for example, inorganic fibers such as glass fibers, rock wool, ceramic fibers, asbestos and carbon fibers, pulp, wood flour, linter and polyamide fibers. These powdery or fibrous reinforcement agents and fillers may be used in different amounts depending on the application of the composition and, where the composition is used for the fabrication of laminates or as a molding material, they may be added in an amount of up to 4 times the total weight of the resins.

(2) A coupling agent such as, for example, vinyltriethoxysilane, vinyltris(β-methoxyethoxy)silane, γ-methacryloxypropyltrimethoxysilane, γ-glycidoxypropyltrimethoxysilane, γ-aminopropyltriethoxysilane,

N-(trimethoxysilylpropyl)ethylenediamine, N-(di-methoxymethyl-silylpropyl)ethylenediamine, γ-chloropropyltrimethoxysilane, vinyltrichlorosilane, β-3,4-epoxycyclohexylethyltrimethoxysilane, and γ-mercaptopropyltriethoxysilane. The coupling agent is generally added in an amount ranging, preferably, 0.001—10.0%, and more preferably, 0.01—5%, both on the basis of the total weight of the resins.

(3) A fire retardant and/or flame-resistant agent including, for example, tetrabromobisphenol-A, tetrabromophthalic anhydride, brominated epoxy resins (brominated bisphenol-A, brominated novolaks, and epoxides of other halogenated compounds), decabromodiphenyl ether, hexabromobenzene, tetrabromoterephthalicacid, chlorinated paraffin, Diels-Alder adducts of hexachlorocyclopentadiene, red phosphorus, tricresylphosphate, esters of phosphonic acid, esters of phosphinic acid, phosphoramidates, antimony trioxide, etc. They may be used within a range of, preferably 1—70%, and more preferably, 5—40%, both on the basis of the total weight of the resins.

(4) One or more kinds of various natural and semi-synthetic substances generally formulated in order to improve the properties of resins in adhesive layers, molded resin product, coating films including, for instance, drying oil, semi-drying oil, oleoresin, rosin, shellac, oil-modified rosin, phenol resins, alkyd resins, urea resins, melamine resins, polyester resins, polyvinylbutyral resin, vinylacetate resin, vinyl chloride resin, acrylic resins and silicone resins. Such resins may be added as much as much as desired so long as they do not impede the properties inherent to the resin composition of this invention. Namely, they may be added generally in an amount of not higher than 30% by weight of the total amount of the resins.

Curing conditions for converting the curable resin composition according to this invention into a cured product may vary depending on the types of catalyst or resins actually used. They may also vary in accordance with the form of the composition. The composition according to this invention is generally coated onto a substrate as adhesive or coating film or formed or laminated in the form of powder or pellet, or in a state of being impregnated in a substrate, and then heated until cured. The curing temperature ranges generally 0—300°C, and particularly, 100—250°C. The heating time for curing the composition is effected, especially, by the form of the composition and is generally within a range of from 30 seconds to 10 hours. It is necessary to apply heat for a time period sufficient to cure the resinous components completely. Where the composition according to this invention is used for the fabrication of a molded or otherwise shaped product, laminate or adhered structure, it is desired to apply a pressure upon effecting the heat-curing. The pressure may range from 1 to 100 kg/m$^2$.

There is no particular limitation to be vested to the actual application form of the composition according to this invention. The following are examples of formulations suitable for use as an impregnating varnish and for use in laminates.

A homogeneous solution is prepared by mixing the maleimide compound and epoxy resin, and, optionally, the amino compound which may be added as required, and/or the prepolymer of any two kinds of components among the three components with an organic solvent. It is preferred to use these resins in such amounts that the total concentration of the resins falls within a range of 10—70%. To the thus-obtained solution, another curing agent, a silane-coupling agent and fire retardant may be added as required. Then, they are mixed uniformly into varnish.

The impregnating varnish resulting from the above-described operation is then impregnated in a sheet-like reinforcement material such as glass cloth, glass sheet, non-woven glass fabric, asbestos sheet or the like and, if required, dried in wind for a predetermined time period. Thereafter, it is dried in an oven maintained at 60—160°C, thereby obtaining a prepreg (preimpregnate). The prepreg obtained with the uniform varnish prepared by the composition of this invention does not develop any separation of its components or foams and, moreover, has preferable dryness to touch. The thus-obtained prepreg can be stored stably over a long period of time at room temperature. A plural sheets of such prepreg art then superposed and, if necessary, a copper foil or copper foils may be applied onto either upper or lower surface of the thus-superposed prepreg or onto both upper and lower surfaces thereof. Thereafter, it is formed under pressure for a certain period of time in a compression-molding machine at a temperature of 100—250°C and a pressure of 1—100 kg/cm$^2$.

During this compression molding, the resins are fused and exhibit a suitable degree of low characteristics, thereby facilitating the uniform impregnation of the resins. The resins are thus cured as mentioned above and a laminate or copper-lined laminate of good quality is provided.

The present invention will now be described further in the following examples:

### Example 1

4-Methyl-2,4-bis(p-N-maleimidophenyl)pentene-1 and DEN—431 (trade mark, novolak epoxy resin produced by Dow Chemical Company), respectively in the amounts of 38.5 g and 16.5 g, were uniformly dissolved in 45 g of tetrahydrofuran. The thus-prepared varnish was impregnated in glass cloth (thickness: 0.18 mm) and dried for 20 minutes at 100°C, thereby obtaining a preimpregnate. Nine sheets of the thus-prepared preimpregnates were superposed and a sheet of copper foil was then placed on the top of the preimpregnates. At a press pressure of 40 kg/cm$^2$, it was heated by raising its temperature from 100°C to 180°C over 30 minutes and further heated at 180°C for one hour, providing a copper-lined laminate. This laminate was subjected to after-curing for 10 hours in an oven of 220°C.

Table 1 shows the resistance of the resulting laminate to the heat of soft solder and the anti-peeling strength of the copper foil.

Example 2

In 61.4 g of methylethyl ketone, were dissolved 42.6 g of N-(p-isopropenylphenyl)maleimide oligomer (composition: monomer 2.7%, dimer 77.3%, trimer 6.7%, tetramer and higher polymers 13.3%), 9.9 g of 4.4'-diaminodiphenylmethane and 22.5 g of Epikote-828 (trade mark; bisphenol-type epoxy resin produced by Shell International Chemical Inc.). Glass cloth (thickness: 0.18 mm) was impregnated with the thus-prepared varnish and then dried at 95°C for 15 minutes, thereby providing a preimpregnate. Nine sheets of the thus-prepared preimpregnates were superposed and a sheet of copper foil was then placed on the top of the preimpregnates. It was thereafter pressed, bonded under pressure, and cured in accordance with the following conditions. Namely, at a press pressure of 40 kg/cm$^2$, it was heated by raising its temperature from 100°C to 180°C over 30 minutes and maintained at 180°C for one further hour.

Table 1 also shows the resistance of the resulting laminate to the heat of soft solder and the anti-peeling strength of the copper foil.

Example 3

After thoroughly grinding and mixing 213 g of the linear dimer mixture of N-(p-isopropenylphenyl)maleimides consisting of 89.5% of 4-methyl-2,4-bis(p-N-maleimidophenyl)pentene-1 and 10.5% of 4-methyl-2,3-bis(p-N-maleimidophenyl)pentene-2 and 50 g of 4,4'-diaminodiphenylmethane, the resulting mixture was heated at 125°C to a fused state, in which they were reacted to each other for 20 minutes. Subsequent to cooling down the reaction product and grinding the same, the resulting 44 g of powder and 11 g of DEN—431 were dissolved in 45 g of 1,4-dioxane, thereby providing varnish.

The thus-prepared varnish was used to produce a laminate under the same conditions as in Example 1. The resistance of the laminate to the heat of soft solder and the anti-peeling strength of the copper foil were measured. Measurement results are also shown in Table 1.

Comparative Example 1

Powder obtained by thoroughly grinding and mixing 89.6 g of N,N'-(methylene-di-p-phenylene)bismaleimide and 24.8 g of 4,4'-diaminodiphenylmethane was heated to 120°C, thereby fusing same and then reacting the compounds to each other for 10 minutes. The reaction product was then cooled down to solid. The resulting solid was ground again, providing 41 g of powder, which was then dissolved together with 10 g of DEN—431 in 45 g of N,N-dimethylformamide, resulting in varnish. Glass cloth (thickness: 0.18 mm) was impregnated with the varnish and dried at 160°C for 20 minutes, thereby obtaining a preimpregnate. Nine sheets of the thus-obtained preimpregnates were superposed and a sheet of copper foil was then placed on the top of the preimpregnates. At a press pressure of 40 kg/cm$^2$, it was heated by raising its temperature from 120°C to 180°C over 30 minutes and then heated at 180°C for further one hour, resulting in a copper-lined laminate.

The resistance of the laminate to the heat of soft solder and the anti-peeling strength of the copper foil are also shown in Table 1.

Comparative Example 2

In 45 g of N-methyl-2-pyrrolidone, were intimately dissolved 41 g of N,N'-(methylene-di-p-phenylene)bismaleimide and 14 g of EPN—1138 (trade mark; novolak-type epoxy resin produced by Ciba-Geigy AG). A copper-lined laminate was prepared under conditions similar to those used in Comparative Example 1. Its resistance to the heat of soft solder and the anti-peeling strength of the copper foil are shown in Table 1.

TABLE 1

| Property \ Example No. | 1 | 2 | 3 | 1* | 2* |
|---|---|---|---|---|---|
| Resistance to heat of soft solder (300°C) (sec) | 130 | 120 | 127 | 100 | 115 |
| Anti-peeling strength of copper foil (kg/cm) | 1.32 | 1.57 | 1.51 | 1.21 | 1.09 |

* Comparative Example

Example 4

In 50 g of methylethyl ketone, were dissolved 47 g of N-(p-isopropenylphenyl)maleimide oligomer (composition: monomar 3.7%, dimer 83.3%, trimer 5.1%, tetramer and higher polymers 7.9%) and 3 g of Epikote (trade mark; bisphenol-type epoxy resin produced by Shell International Chemicals Inc.) to Form varnish. The stability of the varnish was determined by virtue of variations in its viscosity. Results are shown in Table 2.

Comparative Example 3

With 50 g of methylethyl ketone, were mixed 47 g of a prepolymer produced from N,N'-(methylene-di-p-phenylene)bismaleimide and 4,4'-diaminodiphenylmethane as in comparative Example 1. However, the latter were insoluble to the former. Substitution of 50 g of N-methyl-2-pyrrolidone for methylethyl ketone resulted in a uniform solution. The stability of the thus-prepared varnish was determined through measuring its viscosity. Results are also shown in Table 2.

TABLE 2

| | Number of days allowed to stand | | | |
|---|---|---|---|---|
| | 0 | 7 | 14 | 21 |
| Example 4 | ≤0.5 | 0.5 | 0.5 | 0.5 |
| Comparative Example | 8.8 | 17.6 | 36.2 | 63.4 |

Note 1: unit poise (25°C)
Note 2: Measurement method bubble viscometer (Gardner-Holdt method)

Example 5

In 100 g of methylethyl ketone, were dissolved 80 g of N-(p-isopropenylphenyl)maleimide oligomer (composition: monomer 3.7%, dimer 83.3%, trimer 5.1%, tetramer and higher polymers 7.9%), 20 g of Epikote-828, 5.5 g of trimellitic anhydride and 1.1 g of 4,4'-diaminodiphenylsulphone to form a uniform solution. Then, methylethyl ketone was allowed to evaporate from the solution at 50°C and at a reduced pressure, leaving a resin composition. This composition was poured into a mold which had been in advance coated with a parting agent and maintained at 110°C. the mold was made of stainless steel. It was then degasified under a reduced pressure and, thereafter, pressed under a pressure of 70 kg/cm$^2$ and slowly heated and cured, first at 170°C for one hour and then at 200°C for 3 hours. After cooling down the thus cured molded product to room temperature, it was withdrawn from the mold and a resin plate (i.e., test specimen) of 3 mm × 100 mm × 100 mm was obtained. The thermal deformation temperature, dielectric constant and dielectric loss tangent of the thus-cured resin plate were respectively 312°C, 2.84 (1 MHz, at 25°C) and 0.011 (1 MHz, at 25°C). Another resin plate (4 mm × 10 mm × 100 mm) prepared similarly had bending strength of 16.3 kg/mm$^2$ at 25°C.

**Claims**

1. A curable resin composition comprising:

a) at least one maleimide compound selected from the group consisting of N-(alkenylphenyl)maleimides represented by the general formula (I):

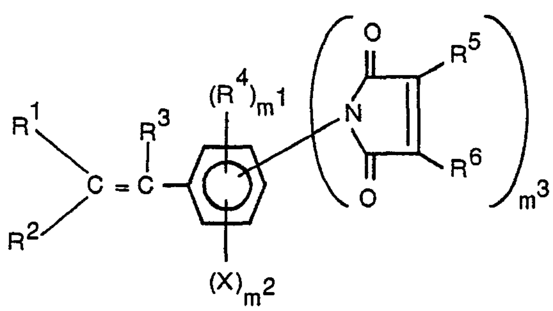

(I)

wherein $R^1$—$R^6$ may be the same or different from one another and denote independently hydrogen, a hydrocarbon group having 1—20 carbon atoms, a halogen,

$$R^7O\text{— or } R^7\overset{O}{\overset{\|}{C}}\text{— group}$$

(where $R^7$ represents a hydrocarbon group having 1—20 carbon atoms or a hydrocarbon group having 1—20 carbon atoms and substituted by one or more halogen atoms of at least one kind), hydroxyl group, cyano group, or a hydrocarbon group substituted by one or more halogens,

$$R^7O\text{—} \text{ or } R^7\overset{\overset{O}{\|}}{C}\text{—} \text{ group}$$

(where $R^7$ is as defined above), hydroxyl group or cyano group and having 1—20 carbon atoms prior to the substitution, a plurality of $R^4$s may be the same or different when $m^1$ stands for a value of 2 or greater, $R^3$ may be coupled with either $R^1$ or $R^2$, thereby forming a ring, X denotes at least one atom or group selected from hydrogen, halogens, hydroxyl group,

$$R^7O\text{—}, R^7\overset{\overset{O}{\|}}{C}\text{—} \text{ and } R^7\overset{\overset{O}{\|}}{C}\overset{\overset{H}{|}}{N}\text{—} \text{ groups}$$

(where $R^7$ is as defined above), cyano group, nitro group and carboxyl group, a plurality of Xs may be the same or different when $m^2$ stands for a value of 2 or greater, and $m^1$, $m^2$ and $m^3$ represent independently a positive integer and $m^1 + m^2 + m^3 = 5$, dimers of said maleimides and polymers of said maleimides having a polymerization degree of at least 3; and

b) one or more kinds of epoxy resins, each having at least one epoxy group in the unit molecule thereof.

2. A curable resin composition as claimed in Claim 1, wherein said composition further comprises c) an amino compound represented by the general formula (II):

$$Q\text{—}(NH_2)_n \qquad \text{(II)}$$

wherein Q indicates an organic group having 1—150 carbon atoms and a valence of $n$, Q may contain at least one kind of atom selected from hydrogen, oxygen, sulphur, halogen, nitrogen, phosphorus and silicon atoms, and $n$ stands for an integer of at least 1, and said composition contains at least one kind of a prepolymer of at least parts of any two components among components a), b), and c).

3. A curable resin composition as claimed in Claim 1 or 2, wherein said maleimide compound is at least one maleimide compound selected from the group consisting of N-(p-isopropenylphenyl)maleimide, its dimers and its polymers having a polymerization degree of at least 3.

4. A curable resin composition as claimed in Claim 1 or 2, wherein said maleimide compound is at least one dimer of N-(p-isopropenylphenyl)maleimide.

5. A curable resin composition as claimed in Claim 1 or 2, wherein said maleimide compound is at least one linear dimer of N-(p-isopropenylphenyl)maleimide.

6. A curable resin composition as claimed in Claim 5, wherein the linear dimer of N-(p-isopropenylphenyl)maleimide is at least one dimer selected from 4-methyl-2,4-bis(p-N-maleimidophenyl)pentene-1 and 4-methyl-2,4-bis(p-N-maleimidophenyl)pentene-2.

7. A curable resin composition as claimed in Claim 1 or 2, wherein component a) is a mixture of N-(p-isopropenylphenyl)maleimide, its dimers, its trimers, and one or more of its polymers having a polymerization degree of at least 4.

8. A curable resin composition as claimed in Claim 7, wherein said mixture contains at least 70% of dimers of N-(p-isopropenylphenyl)maleimide.

9. A curable resin composition as claimed in Claim 1 or 2, wherein said epoxy resins include at least one epoxy resin containing benzene rings.

10. A curable resin composition as claimed in Claim 1 or 2, wherein said epoxy resins include at least one bisphenol-type epoxy resin.

11. A curable resin composition as claimed in Claim 1 or 2, wherein said epoxy resins include at least one novolak-type epoxy resin.

12. A curable resin composition as claimed in Claim 2, wherein said amino compound is an amino compound containing one or more benzene rings.

13. A curable resin composition as claimed in Claim 2, wherein said amino compound is a reaction product of aniline and formaldehyde.

14. A curable resin composition as claimed in Claim 2, wherein said amino acompound is 4,4'-diaminodiphenyl methane.

15. A curable resin composition as claimed in Claim 1 or 2, wherein the weight ratio of component b) to component a) ranges from 3:97 to 97:3.

16. A curable resin composition as claimed in Claim 2, wherein the weight ratio of component c) to component a) ranges from 3:97 to 97:3.

17. A curable resin composition as claimed in Claim 2, wherein the prepolymer is formed by a part of component c) and a part of component a) and the weight ratio of component c) to component a) in said prepolymer is such that the number ratio of all amino groups in component c) in the prepolymer to all maleimido groups in component a) in the prepolymer is 1 or less.

18. A curable resin composition as claimed in Claim 2, wherein the prepolymer is formed by a part of component b) and a part of component c), and has a molecular weight of from 50 to 8000 and is soluble to a solvent and fusible.

19. A curable resin composition as claimed in Claim 1 or 2, wherein said composition is substantially free of solvent.

20. A curable resin composition as claimed in Claim 1 or 2, wherein said composition further comprises an organic solvent.

21. A curable resin composition as claimed in Claim 1 or 2, wherein said composition further comprises at least one compound selected from the group consisting of tetrahydrofuran, methylethyl ketone, 1,4-dioxane, acetone, methylisobutyl ketone, dichloromethane, trichloroethane, benzene, toluene, xylene, acetonitrile, 2-n-butoxyethanol, 2-ethoxyethylacetate, diethylether, 2-methoxyethanol, 2-ethoxyethanol, N,N-dimethylformamide, N,N-dimethylacetamide and N-methyl-2-pyrrolidone.

22. A curable resin composition as claimed in Claim 1 or 2, wherein said composition further comprises at least one compound selected from the group consisting of tetrahydrofuran, methylethyl ketone, 1,4-dioxane, acetone, acetonitrile, 2-methoxyethanol, 2-ethoxyethanol.

23. Varnish containing a curable resin composition as claimed in Claim 1 or 2 and having a resin concentration of from 5 to 80% by weight.

24. Varnish containing a curable resin composition as claimed in Claim 1 or 2 and having a resin concentration of from 10 to 70% by weight.

25. A curable resin composition as claimed in Claim 1 or 2, wherein said composition further comprises one or more resins selected from the group consisting of drying oil, semi-drying oil. oleoresin, rosin, shellac, oil-modified rosin, phenol resins, alkyl resins, urea resins, melamine resins, polyester resins, polyvinylbutyral resins, vinylacetate resins, vinylchloride resin, acrylic resins and silicone resins, and said one or more resins are contained in total in an amount of not more than 30% of the weight of the entire resins.

26. A curable resin composition as claimed in Claim 1 or 2, wherein said composition further comprises one or more powdery materials other than resins and said powdery materials are contained in total in an amount up to 4 time the weight of the entire resins.

27. A curable resin composition as claimed in Claim 1 or 2, wherein said composition further comprises a coupling agent in an amount of 0.001—10% by weight of the entire resins.

28. A curable resin composition as claimed in Claim 1 or 2, wherein said composition further comprises a coupling agent in an amount of 0.01—5% by weight of the entire resins.

29. A curable resin composition as claimed in Claim 1 or 2, wherein said composition further comprises at least one kind of fire retardants and flame resistant agents in an amount of 1—70% by weight of the entire resins.

30. A curable resin composition as claimed in Claim 1 or 2, wherein said composition further comprises at least one kind of fire retardants and flame resistant agents in an amount of 5—40% by weight of the entire resins.

31. A curable resin composition as claimed in Claim 1 or 2, wherein said composition further comprises a curing agent for component b).

32. A curable resin composition as claimed in Claim 1 or 2, wherein said composition further comprises a radical polymerization initiator.

33. An article or item obtained by curing a curable resin composition as claimed in Claim 1 or 2.

34. A coating film obtained by curing a curable resin composition as claimed in Claim 1 or 2.

35. A molded product obtained by curing a curable resin composition as claimed in Claim 1 or 2.

36. A laminated product obtained by curing a curable resin composition as claimed in Claim 1 or 2.

37. A preimpregnate obtained by impregnating a sheet-like reinforcement material with a curable resin composition as claimed in Claim 1 or 2 and then causing said composition to semi-cure.

38. A preimpregnate as claimed in Claim 37, wherein said sheet-like reinforcement material contains glass fibers.

39. A laminate obtained from a plurality of preimpregnates as claimed in Claim 37.

40. A copper-lined laminate obtained from a plurality of preimpregnates as claimed in Claim 37.

41. A laminate obtained from a plurality of preimpregnates as claimed in Claim 37.

42. A copper-lined laminate obtained from a plurality of preimpregnates as claimed in Claim 37.

**Patentansprüche**

1. Härtbare Harzzusammensetzung umfassend:

a) Zumindest eine Maleimidverbindung, ausgewählt unter N-(Alkenylphenyl)-maleimiden der allgemeinen Formel (I):

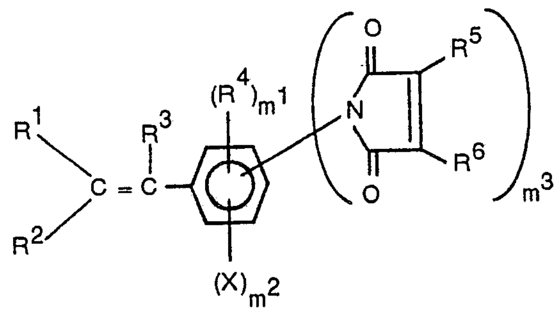

(I)

worin $R^1$ bis $R^6$ gleich oder verschieden sein können und unabhängig Wasserstoff, eine Kohlenwasserstoffgruppe mit 1 bis 20 Kohlenstoffatomen, ein Halogenatom, eine

$$R^7O\text{—} \text{ oder } R^7\overset{O}{\overset{\|}{C}}\text{—Gruppe}$$

(worin $R^7$ eine Kohlenwasserstoffgruppe mit 1 bis 20 Kohlenstoffatomen oder eine Kohlenwasserstoffgruppe mit 1 bis 20 Kohlenstoffatomen und substituiert durch ein oder mehrere Halogenatome, zumindest einer Art, bedeutet), eine Hydroxylgruppe, eine Cyanogruppe oder eine Kohlenwasserstoffgruppe, die durch ein oder mehrere Halogenatome,

$$R^7O\text{—} \text{ oder } R^7\overset{O}{\overset{\|}{C}}\text{—Gruppen}$$

(worin $R^7$ wie vorstehend definiert ist), Hydroxylgruppen oder Cyanogruppen substituiert ist, und vor der Substitution 1 bis 20 Kohlenstoffatome aufweist, bedeuten, wobei mehrere Reste $R^4$ gleich oder voneinander verschieden sein können, wenn $m^1$ für einen Wert von 2 oder höher steht, $R^3$ entweder mit $R^1$ oder mit $R^2$ verknüpft sein kann, um hierdurch einen Ring zu bilden, X zumindest ein Atom oder eine Gruppe, ausgewählt unter Wasserstoff, Halogenen, einer Hydroxylgruppe,

$$R^7O\text{—}, R^7\overset{O}{\overset{\|}{C}}\text{—} \text{ und } R^7\overset{O}{\overset{\|}{C}}\overset{H}{\overset{|}{N}}\text{—Gruppen}$$

(worin $R^7$ wie vorstehend definiert ist), einer Cyanogruppe, einer Nitrogruppe und einer Carboxylgruppe, bezeichnet, mehrere Reste X gleich oder voneinander verschieden sein können, wenn $m^2$ für einen Wert von 2 oder höher steht, und $m^1$, $m^2$ und $m^3$ unabhängig eine positive ganze Zahl bedeuten, und $m^1 + m^2 + m^3 = 5$, Dimere dieser Maleimide und Polymere dieser Maleimide mit einem Polymerisationsgrad von zumindest 3; und

b) eine oder mehrere Arten von Epoxyharzen, von denen jede zumindest eine Epoxygruppe in ihrer Moleküleinheit aufweist.

2. Härtbare Harzzusammensetzung gemäß Anspruch 1, die weiterhin umfaßt:

c) eine Aminoverbindung der allgemeinen Formel (II):

$$Q\text{—}(NH_2)_n \qquad \text{(II)}$$

worin Q eine organische Gruppe mit 1 bis 150 Kohlenstoffatomen und einer Wertigkeit von $n$ anzeigt, Q zumindest eine Art von Atomen, ausgewählt unter Wasserstoff-, Sauerstoff-, Schwefel-, Halogen-, Stickstoff-, Phosphor- und Siliciumatomen enthalten kann, und $n$ für eine ganze Zahl von zumindest 1 steht, und die zumindest eine Art eines Prepolymeren von zumindest Teilen irgendwelcher zwei Komponenten unter den Komponenten a), b) und c) enthält.

3. Härtbare Harzzusammensetzung gemäß Anspruch 1 oder 2, in der die Maleimidverbindung zumindest eine Maleimidverbindung, ausgewählt unter N-(p-Isopropenylphenyl)-maleimid, seinen Dimeren und seinen Polymeren mit einem Polymerisaitonsgrad von zumindest 3 ist.

4. Härtbare Harzzusammensetzung gemäß Anspruch 1 oder 2, in der die Maleimidverbindung zumindest ein Dimeres von N-(p-Isopropenylphenyl)-maleimid ist.

5. Härtbare Harzzusammensetzung gemäß Anspruch 1 oder 2, in der die Maleimidverbindung zumindest ein lineares Dimeres von N-(p-Isopropenylphenyl)-maleimid ist.

6. Härtbare Harzzusammensetzung gemäß Anspruch 5, in der das lineare Dimere von N-(p-Isopropenylphenyl)-maleimid zumindest ein Dimeres, ausgewählt unter 4-Methyl-2,4-bis-(p-N-maleimidophenyl)-penten-1 und 4-Methyl-2,4-bis-(p-N-maleimidophenyl)-penten-2 ist.

7. Härtbare Harzzusammensetzung gemäß Anspruch 1 oder 2, in der die Komponente a) eine Mischung von N-(p-Isopropenylphenyl)-maleimid, seinen Dimeren, seinen Trimeren und einem oder mehreren seiner Polymeren mit einem Polymerisationsgrad von zumindest 4 ist.

8. Härtbare Harzzusammensetzung gemäß Anspruch 7, in der die Mischung zumindest 70% Dimere von N-(p-Isopropenylphenyl)maleimid enthält.

9. Härtbare Harzzusammensetzung gemäß Anspruch 1 oder 2, in der die Epoxyharze zumindest ein Benzolringe enthaltendes Epoxyharz umfassen.

10. Härtbare Harzzusammensetzung gemäß Anspruch 1 oder 2, in der die Epoxyharze zumindest ein Epoxyharz vom Bisphenoltyp umfassen.

11. Härtbare Harzzusammensetzung gemäß Anspruch 1 oder 2, in der die Epoxyharze zumindest ein Epoxyharz vom Novolaktyp umfassen.

12. Härtbare Harzzusammensetzung gemäß Anspruch 2, in der die Aminoverbindung eine einen oder mehrere Benzolringe enthaltende Aminoverbindung ist.

13. Härtbare Harzzusammensetzung gemäß Anspruch 2, in der die Aminoverbindung ein Reaktionsprodukt von Anilin und Formaldehyd ist.

14. Härtbare Harzzusammensetzung gemäß Anspruch 2, in der die Aminoverbindung 4,4'-Diaminodiphenyl-methan ist.

15. Härtbare Harzzusammensetzung gemäß Anspruch 1 oder 2, in der das Gewichtsverhältnis der Komponente b) zur Komponente a) im Bereich von 3:97 bis 97:3 liegt.

16. Härtbare Harzzusammensetzung gemäß Anspruch 2, in der das Gewichtsverhältnis der Komponente c) zur Komponente a) im Bereich von 3:97 bis 97:3 liegt.

17. Härtbare Harzzusammensetzung gemäß Anspruch 2, in der das Prepolymere aus einem Teil der Komponente c) und einem Teil der Komponente a) gebildet wird, und das Gewichtsverhältnis der Komponente c) zur Komponente a) in dem Prepolymeren derart ist, daß das Zahlenverhältnis sämtlicher Aminogruppen in der Komponente c) in dem Prepolymeren zu sämtlichen Maleimidogruppen in der Komponente a) in dem Prepolymeren 1 oder weniger beträgt.

18. Härtbare Harzzusammensetzung gemäß Anspruch 2, in der das Prepolymere aus einem Teil der Komponente b) und einem Teil der Komponente c) gebildet wird, und ein Molekulargewicht von 50 bis 8000 besitzt, und in einem Lösungsmittel löslich und schmelzbar ist.

19. Härtbare Harzzusammensetzung gemäß Anspruch 1 oder 2, in der die Zusammensetzung im wesentlichen von einem Lösungsmittel frei ist.

20. Härtbare Harzzusammensetzung gemäß Anspruch 1 oder 2, in der sie weiterhin ein organisches Lösungsmittel umfaßt.

21. Härtbare Harzzusammensetzung gemäß Anspruch 1 oder 2, in der die weiterhin zumindest eine Verbindung, ausgewählt unter Tetrahydrofuran, Methylethylketon, 1,4-Dioxan, Aceton, Methylisobutylketon, Methylenchlorid, Trichlorethan, Benzol, Toluol, Xylol, Acetonitril, 2-n-Butoxyethanol, 2-Ethoxyethylacetat, Diethylether, 2-Methoxyethanol, 2-Ethoxyethanol, N,N-Dimethylformamid, N,N-Dimethylacetamid und N-Methyl-2-pyrrolidon umfaßt.

22. Härtbare Harzzusammensetzung gemäß Anspruch 1 oder 2, in der sie weiterhin zumindest eine Verbindung, ausgewählt unter Tetrahydrofuran, Methylethylketon, 1,4-Dioxan, Aceton, Acetonitril, 2-Methoxyethanol, 2-Ethoxyethanol umfaßt.

23. Anstrichmittel, enthaltend eine härtbare Harzzusammensetzung gemäß Anspruch 1 oder 2, mit einer Harzkonzentration von 5 bis 80 Gew.-%.

24. Anstrichmittel, enthaltend eine härtbare Harzzusammensetzung gemäß Anspruch 1 oder 2 mit einer Harzkonzentration von 10 bis 70 Gew.-%.

25. Härtbare Harzzusammensetzung gemäß Anspruch 1 oder 2, in der sie weiterhin ein oder mehrere Harze, ausgewählt unter trocknenden Ölen, halbtrocknenden Ölen, Ölharz bzw. Oleoresin, Kolophonium, Schellack, ölmodifiziertem Kolophonium, Phenolharzen, Alkylharzen Harnstoffharzen, Melaminharzen, Polyesterharzen, Polyvinylbutyralharzen, Vinylacetatharzen, Vinylchloridharzen, Acrylharzen und Siliconharzen, umfaßt, und dieses Harz oder diese Harze insgesamt in einer Menge von nicht mehr als 30 Gew.-% der gesamten Harze enthalten sind.

26. Härtbare Harzzusammensetzung gemäß Anspruch 1 oder 2, in der sie weiterhin eines oder mehrere pulverförmige Materialien umfaßt, die verschieden sind von den Harzen, und in der die pulverförmigen Materialien insgesamt in einer Menge bis zu dem Vierfachen des Gewichts der gesamten Harze enthalten sind.

27. Härtbare Harzzusammensetzung gemäß Anspruch 1 oder 2, in der sie ein Kupplungsmittel in einer Menge von 0,001 bis 10 Gew.-% der gesamten Harze umfaßt.

28. Härtbare Harzzusammensetzung gemäß Anspruch 1 oder 2, in der sie weiterhin ein Kupplungsmittel in einer Menge von 0,01 bis 5 Gew.-% der gesamten Harze umfaßt.

29. Härtbare Harzzusammensetzung gemäß Anspruch 1 oder 2, in der sie weiterhin zumindest eine Art

an feuerhemmenden Mitteln und flammfestmachenden Mitteln in einer Menge von 1 bis 70 Gew.-% der gesamten Harze umfaßt.

30. Härtbare Harzzusammensetzung gemäß Anspruch 1 oder 2, in der sie weiterhin zumindest eine Art an feuerhemmenden Mitteln und flammfestmachenden Mitteln in einer Menge von 5 bis 40 Gew.-% der gesamten Harze umfaßt.

31. Härtbare Harzzusammensetzung gemäß Anspruch 1 oder 2, in der sie weiterhin ein Härtungsmittel für die Komponente b) umfaßt.

32. Härtbare Harzzusammensetzung gemäß Anspruch 1 oder 2, in der sie weiterhin einen Initiator für die radikalische Polymerisation umfaßt.

33. Gegenstand oder Erzeugnis, erhalten durch Härten einer härtbaren Harzzusammensetzung gemäß Anspruch 1 oder 2.

34. Überzugsfilm, erhalten durch einer Härten einer härtbaren Harzzusammensetzung gemäß Anspruch 1 oder 2.

35. Geformtes Produkt, erhalten durch Härten einer härtbaren Harzzusammensetzung gemäß Anspruch 1 oder 2.

36. Laminiertes Produkt, erhalten durch Härten einer härtbaren Harzzusammensetzung gemäß Anspruch 1 oder 2.

37. Preimprägniertes Produkt, erhalten durch Imprägnieren eines folienartigen Verstärkungsmaterials mit einer härtbaren Harzzusammensetzung gemäß Anspruch 1 oder 2 und anschließende Semihärtung der Zusammensetzung.

38. Preimprägniertes Produkt gemäß Anspruch 37, in der das folienartige Verstärkungsmaterial Glasfasern enthält.

39. Laminat, erhalten aus einer Vielzahl von preimprägnierten Produkten gemäß Anspruch 37.

40. Kupferverkleidetes Laminat, erhalten aus einer Vielzahl von preimprägnierten Produkten gemäß Anspruch 37.

41. Laminat, erhalten aus einer Vielzahl von preimprägnierten Produkten gemäß Anspruch 37.

42. Kupferverkleidetes Laminat, erhalten aus einer Vielzahl von preimprägnierten Produkten gemaß Anspruch 37.

## Revendications

1. Une composition de résine durcissable comprenant:

a) au moins un composé de type maléimide choisi dans le groupe constitué le N-(alcénylphényl)maléimides représentés par la formule générale (I):

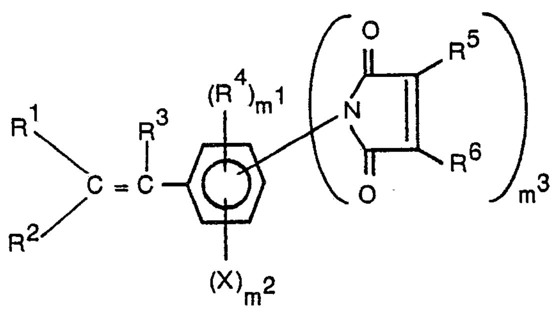

(I)

dans laquelle $R^1$—$R^6$ peuvent être semblables ou différents les uns des autres et désignent indépendamment un hydrogène, un groupe hydrocarboné ayant 1 à 20 atomes de carbone, un halogène, un groupe

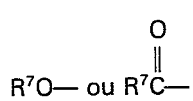

(où $R^7$ représente un groupe hydrocarboné ayant 1 à 20 atomes de carbone ou un groupe hydrocarboné ayant 1 à 20 atomes de carbone et substitué par un ou plusieurs atomes d'halogène d'au moins un type), un groupe hydroxyle, un groupe cyano ou un groupe hydrocarboné substitué par un ou plusiers halogènes, un groupe

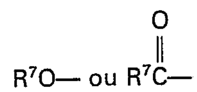

(où $R^7$ est comme défini ci-dessus), un groupe hydroxyle ou un groupe cyano et ayant 1 à 20 atomes de carbone avant la substitution, plusieurs $R^4$ peuvent être semblables ou différents lorsque $m^1$ a une valeur

de 2 ou plus, $R^3$ peut être couplé avec soit $R^1$ soit $R^2$, pour former un cycle, X désigne au moins un atome ou un groupe choisi parmi un hydrogène, les halogènes, un groupe hydroxyle, les groupes

$$R^7O—,\ R^7\overset{\overset{O}{\|}}{C}—\quad \text{et}\quad R^7\overset{\overset{O}{\|}}{C}\overset{\overset{H}{|}}{N}—$$

(où $R^7$ est comme défini ci-dessus), un groupe cyano, un groupe nitro et un groupe carboxyle, plusieurs X peuvent être semblables ou différents lorsque $m^2$ a une valeur de 2 ou plus, et $m^1$, $m^2$ et $m^3$ représentent indépendamment un entier positif et $m^1 + m^2 + m^3 = 5$, les dimères desdits maléimides et les polymères desdits maléimides ayant un degré de polymérisation d'au moins 3; et

b) un ou plusieurs types de résines époxy ayant chacune au moins un groupe époxy dans leur motif moléculaire.

2. Une composition de résine durcissable comme revendiqué dans la revendication 1, où ladite composition comprend de plus c) un composé de type amino représenté par la formule générale (II):

$$Q—(NH_2)_n \qquad (II)$$

où Q indique un groupe organique ayant 1 à 150 atomes de carbone et une valence de n, Q peut contenir au moins un type d'atome choisi parmi les atomes d'hydrogène, d'oxygène, de soufre, d'halogène, d'azote, de phosphore et de silicium et n est un entier d'au moins 1, et ladite composition contient au moins un type d'un prépolymère d'au moins des parties de deux composants quelconques parmi les composants a), b) et c).

3. Une composition de résine durcissable comme revendiqué dans la revendication 1 ou 2 où ledit composé de type maléimide est au moins un composé de type maléimide choisi dans le groupe constitué par le N-(p-isopropénylphényl)maléimide, ses dimères et ses polymères ayant un degré de polymérisation d'au moins 3.

4. Une composition de résine durcissable comme revendiqué dans la revendication 1 ou 2, où ledit composé de type maléimide est au moins un dimère de N-(p-isopropénylphényl)maléimide.

5. Une composition de résine durcissable comme revendiqué dans la revendication 1 ou 2 où ledit composé de type maléimide est au moins un dimère linéaire de N-(p-isopropénylphényl)maléimide.

6. Une composition de résine durcissable comme revendiqué dans la revendication 5 où le dimère linéaire de N-(p-isopropénylphényl)maleimide est au moins un dimère choisi parmi le 4-méthyl-2,4-bis(p-N-maléimidophényl)pentène-1 et le 4-méthyl-2,4-bis(p-N-maléimidophényl)pentène-2.

7. Une composition de résine durcissable comme revendiqué dans la revendication 1 ou 2 où le composant a) est un mélange de N-(p-isopropénylphényl)maléimide, ses dimères, ses trimères et un ou plusieurs de ses polymères ayant un degré de polymérisation d'au moins 4.

8. Une composition de résine durcissable comme revendiqué dans la revendication 7 où ledit mélange contient au moins 70% de dimères de N-(p-isopropénylphényl)maléimide.

9. Une composition de résine durcissable comme revendiqué dans la revendication 1 ou 2 où lesdites résines époxy comprennent au moins une résine époxy contenant des cycles benzènes.

10. Une composition de résine durcissable comme revendiqué dans la revendication 1 ou 2, où lesdites résines époxy comprennent au moins une résine époxy de type bisphénol.

11. Une composition de résine durcissable comme revendiqué dans la revendication 1 ou 2 où lesdites résines époxy comprennent au moins une résine époxy de type novolaque.

12. Une composition de résine durcissable comme revendiqué dans la revendication 2 où ledit composé de type amino est un composé amino contenant un ou plusieurs cycles benzènes.

13. Une composition de résine durcissable comme revendiqué dans la revendication 2 où ledit composé de type amino est un produit de la réaction de l'aniline et du formaldéhyde.

14. Une composition de résine durcissable comme revendiqué dans la revendication 2 où ledit composé de type amino est 4,4'-diaminodiphénylméthane.

15. Une composition de résine durcissable comme revendiqué dans la revendication 1 ou 2 où le rapport pondéral du composant b) au composant a) est compris dans la gamme de 3/97 à 97/3.

16. Une composition de résine durcissable comme revendiqué dans la revendication 2 où le rapport pondéral du composant c) au composant a) est compris dans la gamme de 3/97 à 97/3.

17. Une composition de résine durcissable comme revendiqué dans la revendication 2 où le prépolymère est formé par une partie du composant c) et une partie du composant a) et le rapport pondéral du composant c) au composant a) dans ledit prépolymère est tel que le rapport numérique de tous le groupes amino du composant c) dans le prépolymère à tous les groupes maléimido du composant a) dans le prépolymère est de 1 ou moins.

18. Une composition de résine durcissable comme revendiqué dans la revendication 2 où le prépolymère est formé par une partie du composant b) et une partie du composant c) et a un poids moléculaire de 50 à 8000 et est soluble dans un solvant et fusible.

19. Une composition de résine durcissable comme revendiqué dans la revendication 1 ou 2 où ladite composition est essentiellement dépourvue de solvant.

20. Une composition de résine durcissable comme revendiqué dans la revendication 1 ou 2 où ladite composition comprend de plus un solvant organique.

21. Une composition de résine durcissable comme revendiqué dans la revendication 1 ou 2 où ladite composition comprend de plus au moins in composé choisi dans le groupe constitué par le tétrahydrofuranne, la méthyléthylcétone, le 1,4-dioxanne, l'acétone, la méthylisobutylcétone, le dichlorométhane, le trichloroéthane, le benzène, le toluène, le xylène, l'acétonitrile, le 2-n-butoxyéthanol, l'acétate de 2-éthoxyéthyle, l'éther diéthyle, le 2-méthoxyéthanol, le 2-éthoxyéthanol, le N,N-diméthylformamide, le N,N-diméthylacétamide et la N-méthyl-2-pyrrolidone.

22. Une composition de résine durcissable comme revendiqué dans la revendication 1 ou 2 où ladite composition comprend de plus au moins un composé choisi dans le groupe constitué par le tétrahydrofuranne, la méthyléthylcétone, le 1,4-dioxanne, l'acétone, l'acétonitrile, le 2-méthoxyéthanol et le 2-éthoxyéthanol.

23. Vernis contenant une composition de résine durcissable comme revendiqué dans la revendication 1 ou 2 et ayant une concentration en résine de 5 à 80% en poids.

24. Vernis contenant une composition de résine durcissable comme revendiqué dans la revendication 1 ou 2 ayant une concentration en résine de 10 à 70% en poids.

25. Une composition de résine durcissable comme revendiqué dans la revendication 1 ou 2, où ladite composition comprend de plus une ou plusieurs résines choisies dans le groupe constitué par une huile siccative, une huile semi-siccative, une olérésine, la colophane, la gomme laque, une colophane modifiée par un huile, les résines phénoliques, les résines alcoyliques les résines d'urée, les résines de mélamine, les résines de polyester, les résines de polyvinylburyral, les résines d'acétate de vinyle, les résines de chlorure de vinyle, les résines acryliques et les résines de silicone, et la ou lesdites résines sont contenues en une quantité totale qui ne dépasse pas 30% du poids de la totalité des résines.

26. Une composition de résine durcissable comme revendiqué dans la revendication 1 ou 2 où ladite composition comprend de plus une ou plusieurs matières en poudre autres que des résines et lesdites matières en poudre sont contenues en une quantité totale d'au plus quatre fois le poids de la totalité des résines.

27. Une composition de résine durcissable comme revendiqué dans la revendication 1 ou 2, où ladite composition comprend de plus un agent de couplage en une quantité de 0,001 à 10% du poids de la totalité des résines.

28. Une composition de résine durcissable comme revendiqué dans la revendication 1 ou 2 où ladite composition comprend de plus un agent de couplage en une quantité de 0,01 à 5% du poids de la totalité des résines.

29. Une composition de résine durcissable comme revendiqué dans la revendication 1 ou 2 où ladite composition comprend de plus au moins un type d'agent retardateur de combustion et ignifuge en une quantité de 1 à 70% du poids de la totalité des résines.

30. Une composition de résine durcissable comme revendiqué dans la revendication 1 ou 2 où ladite composition comprend de plus au moins un type d'agent retardateur de combustion et ignifuge en une quantité de 5 à 40% en poids de la totalité des résines.

31. Une composition de résine durcissable comme revendiqué dans la revendication 1 ou 2 où ladite composition comprend de plus un agent de durcissement du composant b).

32. Une composition de résine durcissable comme revendiqué dans la revendication 1 ou 2 où ladite composition comprend de plus un amorceur de polymérisation radicalaire.

33. Un article ou objet obtenu par durcissement d'une composition de résine durcissable comme revendiqué dans la revendication 1 ou 2.

34. Une pellicule de revêtement obtenue par durcissement d'une composition de résine durcissable comme revendiqué dans la revendication 1 ou 2.

35. Un produit moulé obtenu par durcissement d'une composition de résine durcissable comme revendiqué dans la revendication 1 ou 2.

36. Un produit stratifié obtenu par durcissement d'une composition de résine durcissable comme revendiqué dans la revendication 1 ou 2.

37. Un préimprégné obtenu par imprégnation d'une matière de renfort en feuille avec une composition de résine durcissable comme revendiqué dans la revendication 1 ou 2 puis réalisation du demi-durcissement de ladite composition.

38. Un préimprégné comme revendiqué dans la revendication 37 où ladite matière de renfort en feuille contient des fibres de verre.

39. Un stratifié obtenu à partir de plusieurs préimprégnés comme revendiqué dans la revendication 37.

40. Un stratifié à revêtement de cuivre obtenu à partir de plusieurs préimprégnés comme revendiqué dans la revendication 37.

41. Un stratifié obtenu à partir de plusieurs préimprégnés comme revendiqué dans la revendication 37.

42. Un stratifié revêtu de cuivre obtenu à partir de plusieurs préimprégnés comme revendiqué dans la revendication 37.